(19)

Europäisches Patentamt
European Patent Office
Office européen des brevets

(11) **EP 4 518 228 A1**

(12) **EUROPEAN PATENT APPLICATION**
published in accordance with Art. 153(4) EPC

(43) Date of publication:
**05.03.2025 Bulletin 2025/10**

(21) Application number: **23796841.7**

(22) Date of filing: **27.04.2023**

(51) International Patent Classification (IPC):
*H04L 5/00* (2006.01)   *H04W 72/23* (2023.01)
*H04L 1/00* (2006.01)   *H04W 72/12* (2023.01)

(52) Cooperative Patent Classification (CPC):
**H04L 1/00; H04L 5/00; H04W 72/12; H04W 72/23**

(86) International application number:
**PCT/KR2023/005780**

(87) International publication number:
**WO 2023/211199 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 27.04.2022  KR 20220052001
10.08.2022  KR 20220100144
28.09.2022  KR 20220123684

(71) Applicant: **LG Electronics Inc.**
**Yeongdeungpo-gu**
**Seoul 07336 (KR)**

(72) Inventors:
• **YANG, Suckchel**
**Seoul 06772 (KR)**
• **CHOI, Seunghwan**
**Seoul 06772 (KR)**
• **KIM, Seonwook**
**Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD AND APPARATUS FOR TRANSMITTING AND RECEIVING SIGNAL IN WIRELESS COMMUNICATION SYSTEM**

(57)   According to at least one of various embodiments, UE may monitor physical downlink control channel (PDCCH) candidates and detect downlink control information (DCI) through monitoring of the PDCCH candidates. The DCI may support multi-cell scheduling on the basis of cell combinations for a plurality of cells configured in the UE, and the payload size of the DCI may be determined on the basis of a first cell combination in which the total number of DCI bits required for co-scheduled cells from among the cell combinations is maximum.

**FIG. 12**

## Description

## TECHNICAL FIELD

The present disclosure relates to a wireless communication system, and more particularly, to a method and apparatus for transmitting or receiving a downlink/uplink radio signal in a wireless communication system.

## BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

## DISCLOSURE

## Technical Problem

An object of the present disclosure is to provide a method of efficiently performing wireless signal transmission/reception procedures and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

## Technical Solution

According to an aspect, a method of receiving a signal by a user equipment (UE) in a wireless communication system includes monitoring physical downlink control channel (PDCCH) candidates, and detecting downlink control channel (DCI) through monitoring of the PDCCH candidates. The DCI may support multi-cell scheduling based on cell combinations regarding a plurality of cells configured in the UE. A payload size of the DCI may be determined based on a first cell combination in which a total number of DCI bits required for co-scheduled cells from among the cell combinations is the maximum.

The payload of the DCI may be determined based on the summed size of all DCI fields for the first cell combination.

Cells co-scheduled through the DCI may be indicated as one of the cell combinations.

The DCI may include first DCI field-related information for each of a first cell and a second cell which are co-scheduled. Based on that the first cell has a lower serving cell index than the second cell, the first DCI field-related information for the first cell may be located before the first DCI field-related information for the second cell in the DCI. The first DCI field may include at least one of a modulation and coding scheme (MCS) field, a new data indicator (NDI) field, a redundancy version (RV) field, a hybrid automatic repeat request (HARQ) process ID field, a frequency domain resource allocation (FDRA) field, a time domain resource allocation (TDRA) field, and a transmission power command (TPC) field for a physical uplink shared channel (PUSCH).

Transmission or reception of a scheduled signal may be performed only for remaining cells excluding at least one invalid cell from among cells co-scheduled through the DCI. The at least one invalid cell may include at least one of a deactivated secondary cell (SCell), a cell operating as a dormant bandwidth part (BWP), a cell of which resources allocated through the DCI overlap semi-static resources in which uplink (UL)/downlink (DL) directions are configured differently, and a cell of which frequency resource information indicated by the DCI is invalid. Hybrid automatic repeat request-acknowledgement (HARQ-ACK) information may be configured for remaining cells excluding the at least one invalid cell or may be configured to include negative acknowledgement (NACK) information for the at least one invalid cell. The DCI field values for at least one invalid cell in the DCI may be configured based on information for a specific bandwidth part (BWP).

According to another aspect, a processor-readable recording medium having recorded thereon a program for performing the method may be provided.

According to another aspect, a UE for performing the method may be provided.

According to another aspect, a device for controlling a UE for performing the method may be provided.

According to an aspect, a method of transmitting a signal by a BS in a wireless communication system may include generating downlink control information (DCI), and transmitting the DCI to the UE based on at least one of physical downlink control channel (PDCCH) candidates of the UE. The DCI may support multi-cell scheduling based on cell combinations for multiple cells configured for the UE. A payload size of the DCI may be determined based on a first cell combination having the largest total number of DCI bits required for co-scheduled cells from among the cell combinations.

According to another aspect, a BS for performing the method may be provided.

**Advantageous Effects**

According to at least one of various embodiments wireless signal transmission/reception procedures can be performed efficiently.

It will be appreciated by persons skilled in the art that the technical effects that could be achieved with the present disclosure are not limited to what has been particularly described hereinabove and the above and other technical effects that the present disclosure could achieve will be more clearly understood from the following detailed description.

**BRIEF DESCRIPTION OF THE DRAWINGS**

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot.

FIG. 5 illustrates an exemplary PDCCH/PDSCH reception and acknowledgment/negative acknowledgment (ACK/-NACK) transmission process.

FIG. 6 illustrates an exemplary physical uplink shared channel (PUSCH) transmission process.

FIG. 7 illustrates an example of carrier aggregation.

FIG. 8 illustrates an exemplary wireless communication system supporting an unlicensed band.

FIG. 9 illustrates a method of occupying resources in an unlicensed band.

FIG. 10 is a diagram for explaining a specific field-related bit arrangement in a multi-cell scheduling DCI according to an embodiment.

FIG. 11 is a diagram for explaining a payload size in a multi-cell scheduling DCI according to an embodiment.

FIG. 12 is a diagram for explaining a method of receiving a signal by a UE according to an embodiment.

FIG. 13 is a diagram for explaining a method of transmitting a signal by a BS according to an embodiment.

FIGS. 14 to 17 illustrate a communication system 1 and wireless devices applicable to the present disclosure.

FIG. 18 illustrates a discontinuous reception (DRX) operation applicable to the present disclosure.

**DETAILED DESCRIPTION**

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

For the sake of clarity, 3GPP NR is mainly described, but the technical idea of the present disclosure is not limited thereto.

In the present disclosure, the term "set/setting" may be replaced with "configure/configuration," and both may be used interchangeably. Further, a conditional expression (e.g., "if", "in a case", or "when") may be replaced by "based on that" or "in a state/status." In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent disclosure or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

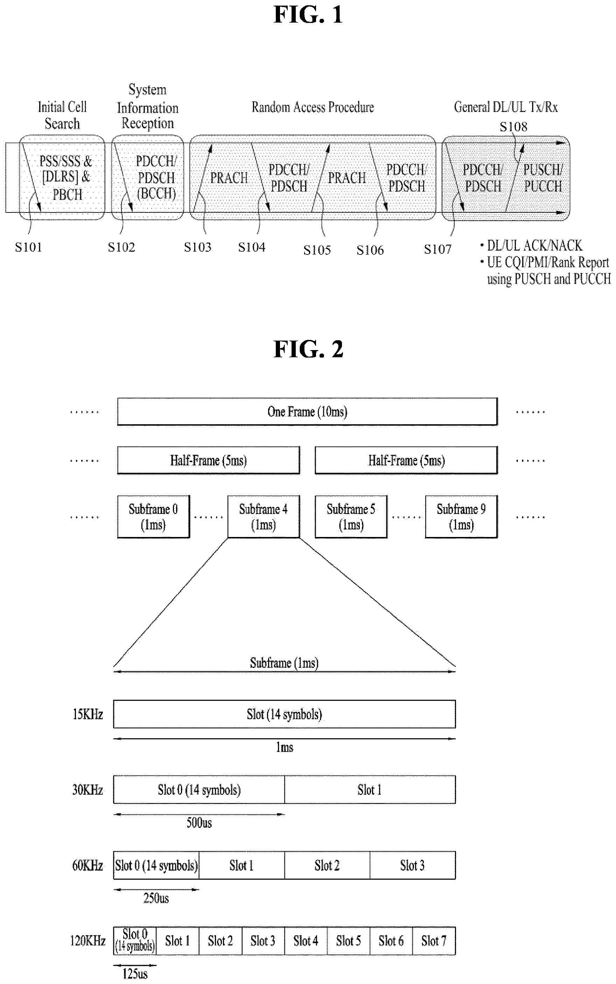

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

The purpose of the random access procedure (RACH procedure) is not limited to initial network access (e.g., S103 to S106). That is, the random access procedure may be used for various purposes. For example, the random access procedure may be used for at least one of an RRC connection re-establishment procedure, handover, UE-triggered UL data transmission, transition from RRC _INACTIVE, SCell time alignment, system information request, beam failure recovery, or UL resource request. However, the random access procedure is not limited thereto. The UE may acquire UL synchronization and/or UL transmission resources from the random access procedure.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS (15*2^u) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: Number of symbols in a slot<br>* $N^{fame,u}_{slot}$: Number of slots in a frame<br>* $N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

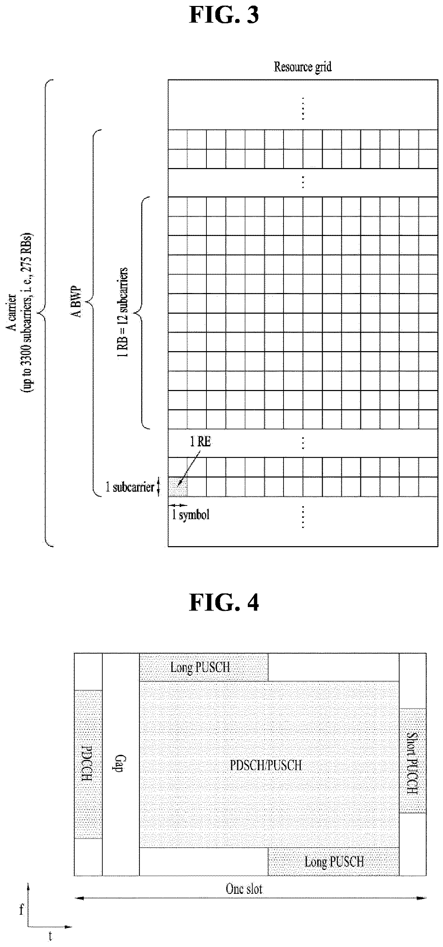

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured by higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters

- controlResourceSetId: A CORESET related to an SS
- monitoringSlotPeriodicityAndOffset: A PDCCH monitoring periodicity (in slots) and a PDCCH monitoring offset (in slots)
- monitoringSymbolsWithinSlot: PDCCH monitoring symbols in a slot (e.g., the first symbol(s) of a CORESET)
- nrofCandidates: The number of PDCCH candidates (one of 0, 1, 2, 3, 4, 5, 6, and 8) for each AL={ 1, 2, 4, 8, 16}

**[0042]** * An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0APDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of one or multiple PUSCH in one cell, or indicating downlink feedback information for configured grant PUSCH (CG-DFI) |
| 0_2 | Scheduling of PUSCH in one cell |

(continued)

| DCI format | Usage |
|---|---|
| 1_0 | Scheduling of PDSCH in one cell |
| 1_1 | Scheduling of PDSCH in one cell, and/or triggering one shot HARQ-ACK codebook feedback |
| 1_2 | Scheduling of PDSCH in one cell |
| 2_0 | Notifying a group of UEs of the slot format, available RB sets, COT duration and search space set group switching |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UE grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.

- SR (Scheduling Request): Information used to request UL-SCH resources.
- HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.
- CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

[Table 5]

| PUCCH format | Length in OFDM symbols $N_{symb}^{PUCCH}$ | Number of bits | Usage | Etc |
|---|---|---|---|---|
| 0 | 1 - 2 | $\leq 2$ | HARQ, SR | Sequence selection |

(continued)

| PUCCH format | Length in OFDM symbols $N_{symb}^{PUCCH}$ | Number of bits | Usage | Etc |
|---|---|---|---|---|
| 1 | 4 - 14 | $\leq 2$ | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM (no UE multiplexing) |
| 4 | 4 - 14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

The PUSCH delivers UL data (e.g., UL-shared channel transport block (UL-SCH TB)) and/or UCI based on a CP-OFDM waveform or a DFTs-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

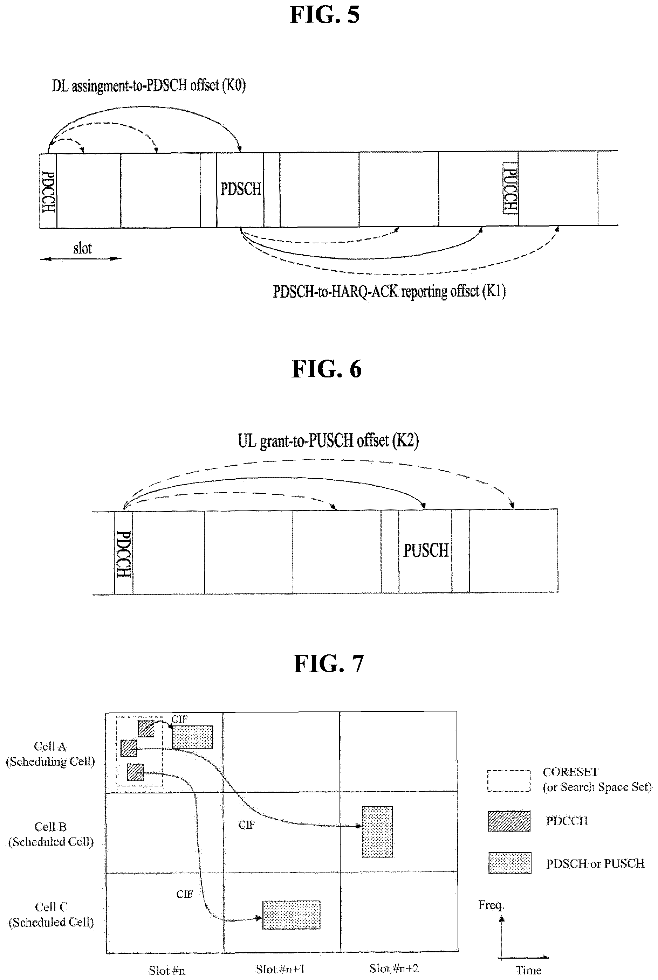

FIG. 5 illustrates an exemplary PDCCH/PDSCH reception and ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

- Frequency domain resource assignment: Indicates an RB set assigned to a PDSCH
- Time domain resource assignment: Indicates K0 and the starting position (e.g., OFDM symbol index) and length (e.g., the number of OFDM symbols) of the PDSCH in a slot.
- PDSCH-to-HARQ _feedback timing indicator: Indicates K1.
- HARQ process number (4 bits): Indicates the HARQ process ID of data (e.g., a PDSCH or TB).

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bitwise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information

- Frequency domain resource assignment: Indicates an RB set assigned to the PUSCH
- Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

Carrier aggregation

NR may support wider UL/DL bandwidths by aggregating multiple UL/DL carriers (i.e., carrier aggregation). It may be possible to transmit/receive signals in multiple carriers through carrier aggregation. When carrier aggregation is applied, each carrier (see FIG. A2) may be referred to as a component carrier (CC). CCs may be adjacent or non-adjacent in the frequency domain. A bandwidth of each CC may be determined independently. Asymmetric carrier aggregation in which the number of UL CCs and the number of DL CCs are different from each other may also be possible.

**[0070]** - Primary Cell (PCell): Cell operating on a primary frequency (e.g., primary component carrier (PCC) in which a UE performs an initial connection establishment procedure or initiates a connection re-establishment procedure in the case of a UE configured with carrier aggregation. Master cell group (MCG) cell operating in a primary frequency in which the UE performs an initial connection establishment procedure or initiates the connection re-establishment procedure.

- Secondary cell (SCell): Cell that provides additional radio resources in addition to a special cell in the case of a UE configured with carrier aggregation.
- Primary SCG cell (PSCell): Secondary cell group (SCG) cell in which a UE performs random access when performing RRC reconfiguration and synchronization processes in the case of DC.
- Special Cell (SpCell): In case of DC, the special cell represents a PCell of MCG or a PSCell of SCG. Otherwise (i.e.

non-DC), the special cell represents a PCell.

- Serving Cell (ServCell): This represents a cell configured in a UE in an RRC_CONNECTED state. When CA/DA is not configured, there is only one serving cell (i.e., PCell). When CA/DA is configured, the serving cell represents a special cell(s) and a set of cells that includes all SCells.

Control information may be configured to be transmitted and received only through a specific cell. For example, UCI may be transmitted over a special cell (e.g., PCell). When a SCell (hereinafter, PUCCH-SCell) in which PUCCH transmission is allowed is configured, UCI may also be transmitted via PUCCH-SCell. As another example, a BS may allocate scheduling cells (set) to reduce PDCCH blinding decoding (BD) complexity at a UE side. For PDSCH reception/PUSCH transmission, the UE may perform PDCCH detection/decoding only in a scheduling cell. The BS may transmit PDCCH only through a scheduling cell (set). For example, a PDCCH for DL allocation may be transmitted in cell #0 (i.e., scheduling cell), and a corresponding PDSCH may be transmitted in cell #2 (i.e., scheduled cell) (Cross-carrier scheduling (CCS)). The scheduling cell (set) may be configured in a UE-specific, UE-group-specific or cell-specific manner. The scheduling cell include a special cell (e.g., PCell).

For cross-carrier scheduling, a carrier indicator field (CIF) is used. The CIF may be semi-statically disabled/enabled by UE-specific (or UE group-specific) higher layer (e.g. radio resource control (RRC)) signaling. The CIF field is an x-bit field (e.g., x=3) within the PDCCH (i.e., DCI) and may be used to indicate a (serving) cell index of the scheduled cell.

- CIF disabled: CIF is not present in the PDCCH. APDCCH on a scheduling cell allocates PDSCH/PUSCH resources on the same cell. That is, the scheduling cell is identical to the scheduled cell.

- CIF enabled: CIF is present in the PDCCH. The PDCCH in the scheduling may allocate PDSCH/PUSCH resources on one of a plurality of cells by using the CIF. The scheduling cell may be the same as or different from the scheduled cell. The PDSCH/PUSCH means a PDSCH or a PUSCH.

FIG. 7 is a diagram for explaining carrier aggregation. In FIG. 7, it is assumed that three cells are aggregated. When the CIF is disabled, each cell may only transmit a PDCCH that schedule its own PDSCH/PUSCH (self-carrier scheduling (SCS)). On the other hand, when the CIF is enabled by UE-specific (or UE-group-specific or cell-specific) higher layer signaling and cell A is configured as a scheduling cell, cell A may transmit not only a PDCCH scheduling the PDSCH/PUSCH of cell A but also a PDCCH scheduling the PDSCH/PUSCH of other cells (i.e., scheduled cells) (cross-carrier scheduling (CCS)). In this case, a PDCCH scheduling its own cell is not transmitted in cell B/C.

NR-shared spectrum/unlicensed band (NR-U) operation

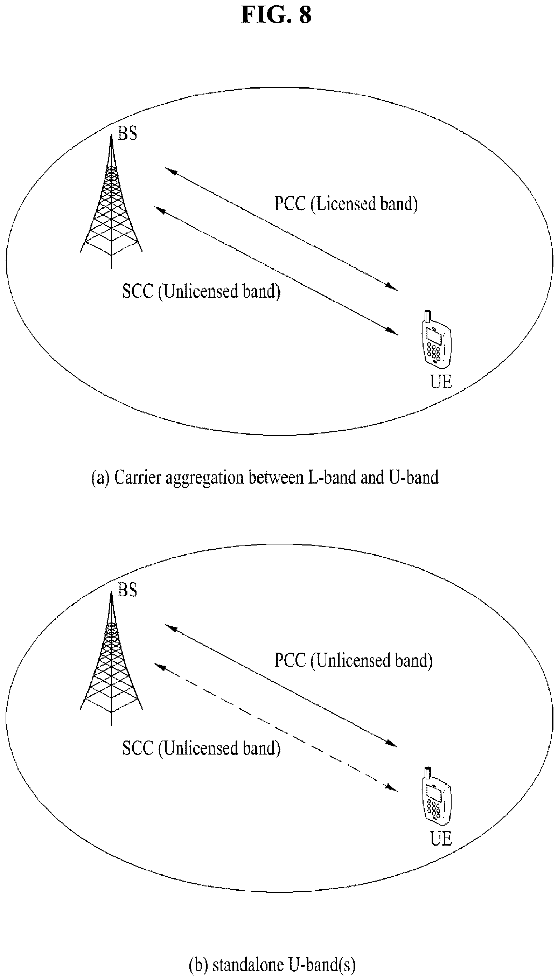

FIG. 8 illustrates a wireless communication system supporting an unlicensed band. For convenience, a cell operating in a licensed band (hereinafter, L-band) is defined as an LCell and a carrier of the LCell is defined as a (DL/UL) LCC. A cell operating in an unlicensed band (hereinafter, U-band) is defined as a UCell and a carrier of the UCell is defined as a (DL/UL) UCC. A carrier of a cell may represent an operating frequency (e.g., a center frequency) of the cell. A cell/carrier (e.g., CC) may generically be referred to as a cell.

When carrier aggregation is supported, one UE may transmit and receive signals to and from a BS in a plurality of aggregated cells/carriers. If a plurality of CCs is configured for one UE, one CC may be configured as a primary CC (PCC) and the other CCs may be configured as secondary CCs (SCCs). Specific control information/channels (e.g., a CSS PDCCH and PUCCH) may be configured to transmit and receive signals only in the PCC. Data may be transmitted and received in the PCC and/ or the SCCs. In FIG. 8(a), the UE and the BS transmit and receive signals in the LCC and the UCC (non-standalone (NSA) mode). In this case, the LCC may be configured as the PCC and the UCC may be configured as the SCC. If a plurality of LCCs is configured for the UE, one specific LCC may be configured as the PCC and the other LCCs may be configured as the SCCs. FIG. 8(a) corresponds to LAA of the 3GPP LTE system. FIG. 8(b) illustrates the case in which the UE and the BS transmit and receive signals in one or more UCCs without the LCC (SA mode). In this case, one of the UCCs may be configured as the PCC and the other UCCs may be configured as the SCCs. To this end, PUCCH, PUSCH, PRACH transmission can be supported. Both the NSA mode and the SA mode may be supported in an unlicensed band of the 3GPP NR system.

Unless otherwise mentioned, the definitions below are applicable to terms as used in the present disclosure

- Channel: A carrier or a part of a carrier including consecutive RBs in which a channel access procedure (CAP) is performed in a shared spectrum
- Channel access procedure (CAP): A procedure of evaluating the availability of a channel based on sensing to determine whether the channel is used by other communication node(s) before a signal transmission. A basic unit for sensing is a sensing slot with a duration Tsl of 9us. The sensing slot duration Tsl may be considered to be idle when a BS or a UE senses the channel during the sensing slot duration, and power detected for at least 4us within the sensing slot duration is less than an energy detection threshold XThresh. Otherwise, the sensing slot duration Tsl of 9us may be considered to be busy. A CAP may be referred to as listen-before-talk (LBT).

- Channel occupancy: Transmission(s) on channel(s) from a BS/UE after a CAP.
- Channel occupancy time (COT): A total time for which the BS/UE and any BS/UE(s) sharing the channel occupancy perform transmission(s) on the channel after the BS/UE corresponding CAPs. When a COT is determined, if a transmission gap is less than or equal to 25us, the gap duration may also be counted in the COT. The COT may be shared for transmission between the BS and corresponding UE(s).
- DL transmission burst: A set of transmissions from the BS without any gaps greater than 16us. Transmissions from the BS separated by a gap of more than 16us are considered as separate DL transmission bursts. The BS may perform transmission(s) after a gap within a DL transmission burst without sensing channel availability.
- UL transmission burst: A set of transmissions from the UE without any gaps greater than 16us. Transmissions from the UE separated by a gap of more than 16us are considered as separate UL transmission bursts. The UE may perform transmission(s) after a gap within a UL transmission burst without sensing channel availability.
- Discovery burst: ADL transmission burst including a set of signal(s) and/or channel(s) confined within a window and associated with a duty cycle. In the LTE-based system, a discovery burst may be transmission(s) initiated by a BS, including a primary synchronization signal (PSS), a secondary synchronization signal (SSS) and a cell-specific reference signal (CRS) and further including a non-zero power CSI-RS. In the NR-based system, a discovery burst may be transmission(s) initiated by a BS, including at least an SS/PBCH block and further including a CORESET for a PDCCH scheduling a PDSCH with SIB1, a PDSCH carrying SIB1, and/or non-zero power CS-RS.

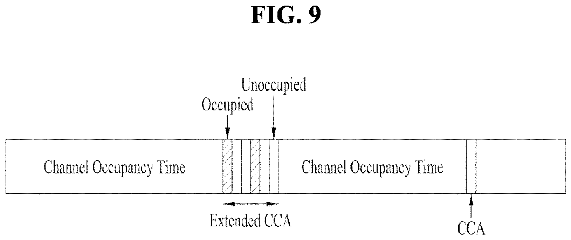

FIG. 9 illustrates a method of occupying resources in an unlicensed band. According to regional regulations concerning the unlicensed band, a communication node in the unlicensed band needs to determine, before signal transmission, whether other communication nodes use a channel. Specifically, the communication node may first perform carrier sensing (CS) before signal transmission to check whether other communication nodes transmit signals. If it is determined that other communication nodes do not transmit signals, this means that clear channel assessment (CCA) is confirmed. When there is a predefined CCA threshold or a CCA threshold configured by higher layer (e.g., RRC) signaling, if energy higher than the CCA threshold is detected in a channel, the communication node may determine that the channel is in a busy state and, otherwise, the communication node may determine that the channel is in an idle state. For reference, in Wi-Fi standard (802.11ac), the CCA threshold is set to -62dBm for a non-Wi-Fi signal and to -82dBm for a Wi-Fi signal. Upon determining that the channel is in an idle state, the communication node may start to transmit signals in the UCell. The above processes may be referred to as listen-before-talk (LBT) or a channel access procedure (CAP). LBT and CAP may be used interchangeably.

Table 6 illustrates exemplary CAPs supported in NR-U.

[Table 6]

|  | Type | Explanation |
|---|---|---|
| DL | Type 1 CAP | CAP with random back-off<br>- time duration spanned by the sensing slots that are sensed to be idle before a downlink transmission(s) is random |
|  | Type 2 CAP<br>- Type 2A, 2B, 2C | CAP without random back-off<br>- time duration spanned by sensing slots that are sensed to be idle before a downlink transmission(s) is deterministic |
| UL | Type 1 CAP | CAP with random back-off<br>- time duration spanned by the sensing slots that are sensed to be idle before a downlink transmission(s) is random |
|  | Type 2 CAP<br>- Type 2A, 2B, 2C | CAP without random back-off<br>- time duration spanned by sensing slots that are sensed to be idle before a downlink transmission(s) is deterministic |

## Multi-cell Scheduling DCI

NR supports a wide spectrum across various frequency ranges. The usability of a 5G Advanced spectrum is expected to increase through re-farming of frequency bands used in previous generations. In particular, for a low frequency band FR1, available spectrum blocks tend to be more segmented and distributed. For a FR2 band and some FR1 bands, the available spectrum may be widened, and thus multiple carriers/cells need to be operated within the bands. There is a need to improve throughput and coverage by using these distributed spectrum bands or wider bandwidth spectrum in a more power-efficient and flexible manner.

It is important to increase flexibility and spectrum/power efficiency when data is scheduled across a plurality of cells including intra-band cells and inter-band cells, but in the current 5G NR scheduling scheme, DCI may only perform scheduling of the PUSCH/PDSCH for a single cell. However, a need for simultaneous scheduling of a plurality of cells is expected to increase in the future due to spectrum expansion/change and the like. To reduce control overhead due to scheduling, it is advantageous to perform PUSCH/PDSCH scheduling of the plurality of cells through single DCI.

To reduce the DCI overhead required for PDSCH/PUSCH scheduling in a carrier aggregation (CA) situation in which a plurality of cells are configured in the future, a multi-cell scheduling method that simultaneously schedules multiple (serving) cells/CCs (PDSCH/PUSCH transmission therethrough) with single DCI in Rel-18 may be considered.

Accordingly, a field configuring DCI for performing multi-cell scheduling as described above (multi-cell DCI) and a control/handling method for a corresponding DCI size are proposed. For convenience, a multi-cell scheduling operation for PDSCH transmission is mainly explained, but an operating principle of the proposed method may be applied equally to multi-cell scheduling for PUSCH transmission. Hereinafter, the term "cell" may refer to the (active) BWP configured/indicated to the corresponding cell.

Hereinafter, multi-cell scheduling DCI may be referred to as multi-cell DCI or simply DCI, and may include at least one of DL grant DCI for scheduling a PDSCH and UL grant DCI for scheduling a PUSCH.

### [1] Configuration of DCI fields for each scheduled cell within multi-cell DCI

When a plurality of cells are scheduled through the same multi-cell DCI, the corresponding DCI fields for the respective cells may be arranged/configured in order of cell index for the same DCI field.

For example, a DCI field for a cell with a lower cell index may be located/configured at a lower bit index (within the DCI).

A single DCI field (commonly applied to cells belonging to the sub-group) may be configured for each cell sub-group including (single or) a plurality of cells, and in this case, the lowest cell index from among the cells belonging to each sub-group may be compared, and the DCI field for the sub-group to which the lower cell index belongs may be located/configured at a lower bit index (within the DCI).

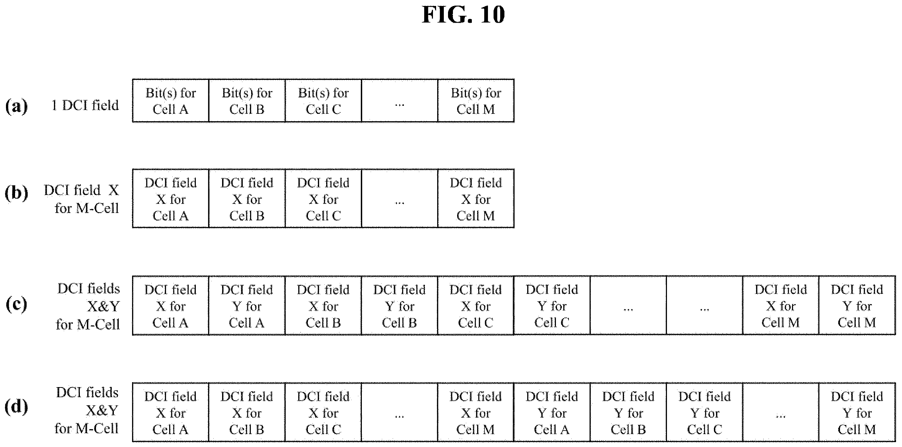

For example, in FIG. 10, it is assumed that a plurality of cells configured in the UE include Cell A to Cell M, a cell index of Cell B is greater than a cell index of Cell A, the cell index of Cell C is greater than a cell index of Cell B, and a cell index of Cell M is greater than the cell index of Cell C. First, referring to FIG. 10 (a), bit(s) for a plurality of cells may be included within one DCI field. Within a DCI field, bits may be arranged in the order Cell A, Cell B, Cell C, ..., Cell M. Referring to FIG. 10 (b), the DCI may include DCI fields X for each of a plurality of cells. Within the DCI, each DCI field X may be arranged in the order of Cell A, Cell B, Cell C, ..., Cell M. The fact that bit/DCI fields for lower index cells are placed before those for higher index cells does not necessarily mean that the bit/DCI fields of cells are located consecutively, and the fields may be located discontinuously as long as a positional precedence/consequence relationship is maintained. For example, referring to FIG. 10(c), the DCI may include DCI fields X and Y for each of a plurality of cells. Within the DCI, each DCI field X and Y may be arranged in the order of DCI fields X and Y for Cell A, DCI fields X and Y for Cell B, DCI fields X and Y for Cell C, ..., DCI fields X and Y for Cell M, but the present disclosure is not limited thereto. For example, referring to FIG. 10(d), the DCI may include DCI fields X and Y for each of a plurality of cells. Within the DCI, each DCI field X may be arranged in the order of Cell A, Cell B, Cell C, ..., Cell M, and then each DCI field Y may be arranged (consecutively and/or discontinuously) in the order of Cell A, Cell B, Cell C, ..., Cell M. In one DCI, application of (a) to (d) may be different for respective DCI fields. For example, in one DCI, one of (a) to (d) may be applied to DCI field 1, and another one of (a) to (d) may be applied to DCI field 2.

The DCI field may include, for example, but is not limited to, at least one of an MCS field and/or an NDI field and/or an RV field and/or a HARQ process ID (HARQ ID) field.

The DCI field may include, but is not limited to, at least one of a frequency domain resource assignment/allocation (FDRA) field and/or a time domain RA(TDRA) field and/or a TPC (for a PUSCH) field.

The cell index may be, for example, a serving cell index or a cell index (on the RRC configuration) used when configuring a candidate cell combination for multi-cell DCI scheduling.

## [2] (Maximum) payload size limit of multi-cell DCI

1) Proposal 1

Regardless of the maximum number of TBs to be transmitted via a single PDSCH configured for each cell (for convenience, this is defined as $N\_t$, and may be configured to, for example, $N\_t = 1$ or $N\_t = 2$) and the number of cells scheduled via the same multi-cell DCI (for convenience, this is defined as $N\_c$) or a combination of cells, the maximum value of the total number of TBs scheduled to a plurality of cells via a single multi-cell DCI may be limited to $N\_max$ or less (for example, $N\_max$ is configured by a BS or is determined as the maximum number of cells schedulable by the multi-cell DCI or $N\_max = 4$).

For example, up to $N\_max$ fields may be configured within the multi-cell DCI for (each of) the MCS and/or NDI and/or RV and/or HARQ ID fields.

For example, when the sum of the $N\_t$ values configured for each of the $N\_c$ cells scheduled with the same multi-cell DCI exceeds the $N\_max$ value, a rule may be determined such that a total of $N\_max$ TBs are allocated/scheduled to the $N\_c$ cells in a manner of cell index first - TB index second.

For example, when $N\_c = 3$ and all three cells (index = 0, 1, 2) have $N\_t = 2$ and $N\_max = 4$, 2/1/1 TBs may be allocated/scheduled to cell indexes 0/1/2, respectively.

The cell index may be, for example, a serving cell index or a cell index (on the RRC configuration) used when configuring a candidate cell combination for multi-cell DCI scheduling.

2) Proposal 2

When the number of cells scheduled through the multi-cell DCI is L (for example, L = 1 or L = 2) or less, scheduling is possible for up to $N\_t$ TBs configured for the corresponding cells, but when the number of cells scheduled through the multi-cell DCI exceeds L, scheduling may be limited to only a single TB for all of the corresponding cells.

For example, the maximum number of total TBs (scheduled to a plurality of cells) $N\_max$ through a single multi-cell DCI may be determined as the maximum number of cells to be scheduled with multi-cell DCI.

For example, up to $N\_max$ fields may be configured within the multi-cell DCI for (each of) the MCS and/or NDI and/or RV and/or HARQ ID fields.

## [3] Processing invalid cells scheduled with multi-cell DCI

1) When an invalid cell is included from among the cells scheduled/indicated through the multi-cell DCI, PDSCH/PUSCH transmission/reception may not be performed for the invalid cell, and PDSCH/PUSCH transmission/-reception may be performed only for the remaining cells.

In this case, the DCI fields (e.g. MCS, NDI, RV, HARQ ID, FDRA, TDRA, TPC (for PUSCH), antenna port(s), transmission configuration indication, SRS resource indicator, precoding information and number of layers, DMRS sequence initialization, PTRS-DMRS association, VRB-to-PRB mapping, PRB bundling size indicator, rate matching indicator, ZP CSI-RS trigger, SRS request, frequency hopping flag, channelAccess-CPext-CAPC (for PUSCH), open-loop power control parameter set indication, and invalid symbol pattern indicator) corresponding to the invalid cell within the multi-cell DCI may not be configured and may be omitted (i.e., the DCI fields are configured sequentially (according to the cell index value/order) only for the remaining cells), or the corresponding DCI field may be configured based on parameters/values configured in a specific DL/UL BWP (e.g., a first active DL/UL BWP specified via a parameter firstActiveDownlinkBWP/firstActiveUplinkBWP or the latest active DL/UL BWP (excluding dormant BWP), or may be reserved with a predefined specific bit value, or the UE may operate to disregard the corresponding field.

For example, when configuring a HARQ-ACK feedback payload corresponding to the multi-cell DCI, a HARQ-ACK bit corresponding to the invalid cell may be omitted (i.e., the HARQ-ACK bit may be configured sequentially (according to the cell index value/order) only for the remaining cells), or the corresponding HARQ-ACK bit may be configured (according to the cell index value/order) for the invalid cell as well, but the corresponding bit may be mapped to NACK. For example, assuming that {Cell A, Cell B, Cell C} are co-scheduled through 1 DCI and Cell B is an invalid cell, HARQ-ACK may be configured with {A/N(s) for (TBs of) Cell A, A/N(s) for (TBs of) Cell C (and/or NACK(s) for remaining bit(s))} or HARQ-ACK may be configured with {A/N(s) for (TBs of) Cell A, NACK(s) for (TBs of) Cell B, A/N(s) for (TBs of) Cell C}.

The invalid cell is a deactivated Scell, a cell operating in a dormant BWP, a cell in which PDSCH (PUSCH) resources indicated through multi-cell DCI overlap in time with a semi-static UL (DL) symbol, a cell in which frequency resources of a PDSCH (PUSCH) allocated through multi-cell DCI are indicated with an invalid value (for example, in the form of a bitmap in which all bits are '0' or in the form of a RIV (resource indication value) in which all bits are '1'), a cell in which time resources of a PDSCH (PUSCH) allocated through multi-cell DCI are indicated with an invalid value (for example, in the form of a SLIV in which all bits are '1'), a cell in which a TB disabling operation is indicated for all TBs (of the cell) through multi-cell DCI, a cell operating in a DRX off state (no PDCCH monitoring), and/or a cell corresponding to a specific time period (or a specific BWP) in which a series of transmission and reception operations are configured/instructed to be stopped for the purpose of BS energy/power saving. For example, assuming that information for resource allocation in DCI (e.g., FDRA field) is separately configured for each scheduled cell, a cell in which all bits of the information for resource allocation are configured to 0 or 1 (i.e., values that are not valid for resource allocation) may be an invalid cell (a cell that is not actually scheduled).

2) To reduce the complexity of the multi-cell DCI configuration and scheduling-related operations, a constraint may be imposed that the SCS used/applied to cells belonging to each cell combination (for convenience, referred to as a "co-scheduled cell set") simultaneously scheduled from the corresponding DCI needs to all have the same value, and when the SCS used/applied between cells belonging to a specific co-scheduled cell set (active BWPs configured/indicated for each of the corresponding cells) have different values, PDSCH/PUSCH transmission/reception may be performed only for the cell to which a specific (valid) SCS is used/applied, and PDSCH/PUSCH transmission/reception may be omitted for the cells to which the remaining (invalid) SCSs are used/applied, and in this case, the cell to which the corresponding invalid SCS is used/applied may correspond to the invalid cell (therefore, the DCI field corresponding to the proposed invalid cell and (HARQ-ACK configuration method may be applied).

In the above case, the valid SCS may be preconfigured via RRC, or the like (for example, a separate valid SCS value may be configured for each co-scheduled cell set, or a single valid SCS value common to all co-scheduled cell sets may be configured) or determined based on a specific rule (for example, Alt 1) determined as an SCS value used/applied to a specific cell (e.g., lowest cell index) in the co-scheduled cell set, Alt 2) determined as the smallest/largest value from among the SCSs used/applied to the cells in the co-scheduled cell set, or Alt 3) determined as an SCS value used/applied to the largest number of cells in the co-scheduled cell set (when there are multiple SCS values used/applied to the largest number of cells, a value determined by applying Alt 1/2 to a plurality of SCS values).

In another method, when the SCS used/applied from among cells belonging to a specific co-scheduled cell set (active BWPs configured/indicated for the corresponding cells) have different values, scheduling via multi-cell DCI may not be allowed for the co-scheduled cell set (the UE may not expect scheduling for the co-scheduled cell set), and accordingly, the UE may omit DCI monitoring (blind decoding) for PDCCH candidates (search space) configured/corresponding to the co-scheduled cell set scheduling (DCI transmission).

## [4] TB disabling for PDSCH scheduled with multi-cell DCI

1) Existing operation

In the case of existing single-cell DCI-based scheduling, when the maximum number of TBs to be transmitted through one PDSCH is configured to 2 (for example, 2 TB transmissions are scheduled through one PDSCH), if a combination of a specific MCS index (e.g., 26) and a specific RV index (i.e., RV ID) (e.g., 1) is indicated through DCI, an operation of disabling the corresponding specific TB index transmission/reception is specified.

2) Proposed operation

When a plurality of cells are scheduled through the multi-cell DCI, RV index 0 or X (e.g. X = 2) may be indicated for each cell (TB) through 1-bit RV, and when a single cell is scheduled through the multi-cell DCI (assuming that the corresponding scheduling is possible), RV index 0/1/2/3 may be indicated for the corresponding cell through 2-bit RV.

3) Proposal 1

For a plurality of cells scheduled through the multi-cell DCI above, the cells may operate to receive a PDSCH while considering that a TB index for which a combination of a specific MCS index Z (e.g. Z = 26) and the RV index X is indicated for each cell is disabled.

For the scheduled multiple cells, the cells may operate to receive a PDSCH assuming that there is no TB disabling for a cell that does not satisfy the condition.

4) Proposal 2

For a plurality of cells scheduled through the multi-cell DCI, when a combination of the MCS index Z and the RV index X is indicated for the same TB index of all cells (where $N\_t = 2$), the TB index may be considered disabled for all cells (where $N\_t = 2$) and may operate to receive the PDSCH.

The method may be applied only when all cells scheduled with multi-cell DCI are cells configured with $N\_t = 2$, or may applied only to cells configured with N_t = 2 from among the cells scheduled with multi-cell DCI.

For the scheduled multiple cells, the cells may operate to receive a PDSCH assuming that there is no TB disabling for a cell that does not satisfy the condition.

5) Proposal 3

When only a single cell is scheduled through the multi-cell DCI, the TB index indicated by a combination of the MCS index Z and a specific RV index Y (e.g. Y = 1) is considered disabled (same as before), and when a plurality of cells are scheduled through the multi-cell DCI, the PDSCH may be received assuming that there is always no TB disabling.

**[5] Handling out-of-order operations related to multi-cell DCI scheduling**

1) Existing operation

First, the out-of-order PDSCH/PUSCH/PUCCH scheduling constraints defined in the current standard with respect to single cell scheduling are briefly explained as follows.

- For two random HARQ IDs on the same cell, when a specific PDSCH #1 is scheduled through a specific PDCCH #1, the UE operates not to expect a situation in which another PDSCH #2, which has a starting symbol earlier than an ending symbol of PDSCH #1, is scheduled through another PDCCH #2, which has an ending symbol later than the ending symbol of PDCCH #1 (this is conveniently referred to as PDSCH out-of-order, or "PDSCH OOO").
- For two random HARQ IDs on the same cell, when a specific PUSCH #1 is scheduled through a specific PDCCH #1, the UE operates not to expect a situation in which another PUSCH #2, which has a starting symbol earlier than an ending symbol of PUSCH #1, is scheduled through another PDCCH #2, which has an ending symbol later than the ending symbol of PDCCH #1 (this is conveniently referred to as "PUSCH OOO").
- For a random cell, if HARQ-ACK feedback corresponding to a specific PDSCH #1 is instructed to be transmitted through a specific slot #A, the UE operates not to expect a situation in which HARQ-ACK feedback corresponding to another PDSCH #2, which starts later than PDSCH #1, is instructed to be transmitted through a slot earlier than slot #A (for convenience, this is referred to as "PUCCH OOO").

2) Proposal

According to an embodiment, the proposed out-of-order PDSCH/PUSCH/PUCCH scheduling constraints related to multi-cell scheduling may include one of the following.

A. For a plurality of PDSCHs #1 in a plurality of cells scheduled through the same multi-cell DCI PDCCH #1, the UE may operate not to expect a situation in which a relationship between the timing of the corresponding (multi-cell DCI) PDCCH #1 and PDSCH #1 on at least one of the corresponding plurality of cells and the timing of other PDCCH #2 and PDSCH #2 is scheduled to corresponding to the PDSCH OOO, and when scheduling is performed such that the relationship corresponds to the PDSCH OOO on at least one cell as described above, the UE may discard/ignore the multi-cell DCI, and/or omit (skip) reception of the plurality of PDSCHs on the scheduled multiple cells scheduled through the corresponding DCI. For example, in relation to multi-cell scheduling, PDSCH OOO is described as follows, when (i) at least one of DCI #1 and DCI #2 is a multi-cell scheduling DCI, (ii) the last symbol of DCI #2 is located after the last symbol of DCI #1, (iii) DCI #1 schedules M PDSCHs#1 {PDSCH#1-1, PDSCH#1-1,,,,, ,PDSCH#1-M} (on M Cells), and (iv) DCI #2 schedules N PDSCHs#2 {PDSCH#2-1, PDSCH#2-1,,,,, ,PDSCH#2-N} (on N Cells), and a start symbol of any one of N PDSCHs#2 {PDSCH#2-1, PDSCH#2-1,,,,,,,PDSCH#2-N} is located before the last symbol of (any one of) M PDSCHs#1 {PDSCH#1-1, PDSCH#1-1,,,,, ,PDSCH#1-M}, the relationship may correspond to PDSCH OOO. M and N may each be an integer greater than or equal to 1.

B. For a plurality of PUSCHs #1 in a plurality of cells scheduled through the same multi-cell DCI PDCCH #1, the UE may operate not to expect a situation in which a relationship between the timing of the corresponding (multi-cell DCI) PDCCH #1 and PUSCH #1 on at least one of the corresponding plurality of cells and the timing of other PDCCH #2 and PUSCH #2 is scheduled to corresponding to the PUSCH OOO, and when scheduling is performed such that the relationship corresponds to the PUSCH OOO on at least one cell as described above, the UE may discard/ignore the multi-cell DCI, and/or omit (skip) transmission of the plurality of PUSCHs on the scheduled multiple cells scheduled through the corresponding DCI. For example, in relation to multi-cell scheduling, PUSCH OOO is described as follows, when (i) at least one of DCI #1 and DCI #2 is a multi-cell scheduling DCI, (ii) the last symbol of DCI #2 is located after the last symbol of DCI #1, (iii) DCI #1 schedules M PUSCHs#1 {PUSCH#1-1, PUSCH#1-1,,,,, ,PUSCH#1-M} (on M Cells), and (iv) DCI #2 schedules N PUSCHs#2 {PUSCH#2-1, PUSCH#2-1,,,,, ,PUSCH#2-N} (on N Cells), and a start symbol of any one of N PUSCHs#2 {PUSCH#2-1, PUSCH#2-1,,,,,,,PUSCH#2-N} is located before the last symbol of (any one of) M PUSCHs#1 {PUSCH#1-1, PUSCH#1-1,,,,, ,PUSCH#1-M}, the relationship may correspond to PUSCH OOO. M and N may each be an integer greater than or equal to 1.

C. For the plurality of PDSCHs#1 on a plurality of cells scheduled through the same multi-cell DCI, the UE may operate not to expect a situation in which a relationship between a timing of HARQ-ACK corresponding to the corresponding PDSCH#1 on at least one of the corresponding plurality of cells and a timing of HARQ-ACK corresponding to other PDSCH #2 is scheduled to correspond to PUCCH OOO, and when as described above, when the relationship is scheduled to correspond to PUCCH OOO on at least one cell as described above, the UE may discard/ignore the multi-cell DCI and/or skip reception of a plurality of PDSCHs on a plurality of cells scheduled through the corresponding DCI and/or drop HARQ-ACK transmission on a plurality of PDSCHs on a plurality of cells scheduled through the corresponding DCI. PDSCH #2 may be related to multi-cell scheduling DCI or may be related to single-cell scheduling DCI. i) For example, assuming that M PDSCHs #1 {PDSCH#1-1, PDSCH#1-2,..., PDSCH#1-M} (M being an integer greater than or equal to 1) are scheduled via multi-cell scheduling DCI#1, N PDSCHs#2 {PDSCH#2-1, PDSCH#2-2,..., PDSCH#2-N} (N being an integer greater than or equal to 1), and at least one of the N PDSCHs #2 starts later than at least one of M PDSCHs #1, the case in which a slot of HARQ-ACK for N PDSCHs#2 is before a slot of HARQ-ACK for M PDSCHs #1 may correspond to PUCCH OOO. ii) As another example, assuming that M PDSCHs #1 {PDSCH#1-1, PDSCH#1-2, ..., PDSCH#1-M} (M being an integer greater than or equal to 1) are scheduled via multi-cell scheduling DCI#1, PDSCH#2 is scheduled via single-cell scheduling DCI#2, and PDSCH#2 starts later than at least one of the M PDSCHs #1, the case in which a slot of HARQ-ACK for PDSCH#2 is before a slot of HARQ-ACK for M PDSCHs #1 may correspond to PUCCH OOO. iii) As another example, assuming that M PDSCHs #1 {PDSCH#1-1, PDSCH#1-2, ..., PDSCH#1-M} (M being an integer greater than or equal to 1) are scheduled via multi-cell scheduling DCI#1, PDSCH#2 is scheduled via single-cell scheduling DCI#2, and at least one of M PDSCHs #1 starts later than PDSCH#2, the case in which a slot of HARQ-ACK for M PDSCHs #1 is before a slot of HARQ-ACK for PDSCH#2 may correspond to PUCCH OOO.

#### [6] Multi-cell DCI based DL SPSIUL CG activation/releasef/retransmission) operation

1) When the multi-cell DCI is transmitted/received based on configured scheduling (CS)-RNTI (and scrambling applied thereto), for a plurality of cells indicated through the corresponding DCI (with a specific (e.g. CIF or new) field in the corresponding DCI), a combination of specific fields (e.g. HARQ process ID, RV, MCS, all or part of frequency domain resource assignment) corresponding to each cell may be checked (validated) to satisfy SPS/CG related activation and/or release (and/or retransmission) indication conditions (refer to Section 102 of 3GPP TS 38.213 V16.2.0), and based thereon, the UE may perform the indicated (validated) operation for each cell.

For example, only the SPS/CG activation operation may be indicated for all (all or some) of the plurality of cells indicated through the same (CS-RNTI-based) multi-cell DCI, only the SPS/CG release operation may be indicated for all (all or some) of the multiple cells, or the SPS/CG activation operation may be indicated for a specific cell from among the corresponding plurality of cells (all or some) and the SPS/CG release operation may be indicated for other cells.

Alternatively, it may be specified that only SPS/CG activation operation is indicated for all (all or some) cells indicated via the same (CS-RNTI-based) multi-cell DCI, or only SPS/CG release operation is indicated for all (all or some) cells.

2) Alternatively, it may be specified that SPS/CG related activation and/or release (and/or retransmission) instructions (for the corresponding cell) are possible only when only one cell is indicated through the (CS-RNTI-based) multi-cell DCI, and that when a plurality of cells are indicated through the corresponding multi-cell DCI, SPS/CG related activation and/or release (and/or retransmission) instructions (all) are not allowed, or only SPS/CG related retransmission scheduling (activation and/or release instructions are not allowed) is allowed.

For a specific cell combination (including a plurality of cells) to be indicated/scheduled through multi-cell DCI, when CS-RNTI (i.e., SPS/CG) is configured for some cells (for convenience, referred to as "cell with CS-RNTI") belonging to the corresponding cell combination, while CS-RNTI (i.e., SPS/CG) is not configured for the remaining cells (for convenience, referred to as "cell without CS-RNTI"),

Opt 1) When the specific cell combination is indicated through the CS-RNTI-based multi-cell DCI, transmission and reception operations are performed assuming that there is no PDSCH/PUSCH scheduling for the cell without CS-RNTI, or

Opt 2) For the specific cell combination, only instruction/scheduling via C-RNTI based multi-cell DCI may be possible/allowed (instruction/scheduling via CS-RNTI based multi-cell DCI may not be possible/allowed).

#### [7] Determining and limiting (maximum) payload size of multi-cell DCI

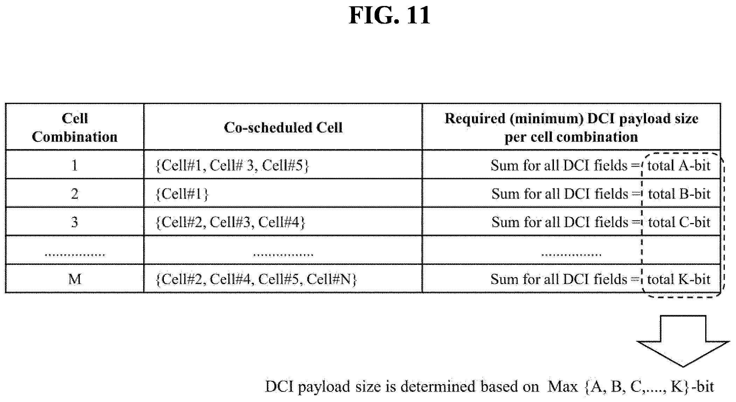

The (maximum) payload size of the multi-cell DCI may be determined as the maximum value from among total sum values, when each total sum value is the sum of the sizes of each of fields for a corresponding cell combination (each field corresponding to each cell within a corresponding cell combination), for each of all cell combinations to be scheduled through the DCI (for each cell combination). As a specific example, referring to FIG. 11, it is assumed that a total of N cells, from Cell #1 to Cell #N, are configured in a UE and that there are M cell combinations to be co-scheduled through multi-cell scheduling DCI. For example, M cell combinations may be configured to a UE by a BS. It is assumed that bits of all DCI fields required for scheduling of Case 1 are (at least) A-bits in total, that bits of all DCI fields required for scheduling of Case 2 are (at least) B-bits in total, that bits of all DCI fields required for scheduling of Case 3 are (at least) C-bits in total, and that bits of all DCI fields required for scheduling of Case M are (at least) K-bits in total. Payloads of multi-cell scheduling DCI may be configured based on Max {A, B, C,..., K}-bits to cover Cases 1 to M. For example, the payload of multi-cell scheduling DCI may be configured to be equal to or greater than Max {A, B, C, ..., K}-bits.

The UE may not expect/assume that a payload size of multi-DCI determined as described above is configured (such as a combination of cells for scheduling multi-cell DCI and/or a transmission parameter for each cell) to exceed the maximum number of bits N (e.g. N = 140) to which a specific encoding scheme (e.g. polar code) is to be applied/supported, and when such a case occurs, the UE may not perform a monitoring/decoding operation for the multi-cell DCI, or may perform a monitoring/decoding operation for the DCI while a payload size of the DCI is adjusted to the number of bits N by removing certain bits (e.g., fields corresponding to high indices) configured/configured in the DCI.

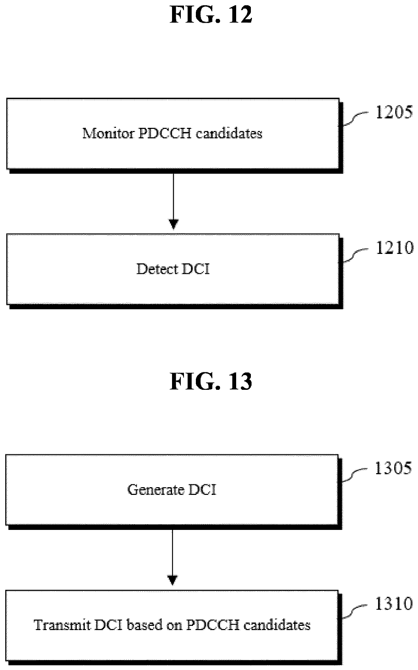

FIG. 12 shows an example implementation of signal reception by a UE based on at least some of the embodiments described above. Even without separate explanation, the previously explained contents may be referenced to help understand FIG. 12.

Referring to FIG. 12, the UE may monitor physical downlink control channel (PDCCH) candidates (1205).

The UE may detect downlink control channel (DCI) through monitoring of the PDCCH candidates (1210).

The DCI may support multi-cell scheduling based on cell combinations regarding a plurality of cells configured in the UE. A payload size of the DCI may be determined based on a first cell combination in which a total number of bits required for co-scheduled cells from among the cell combinations is maximum.

The payload of the DCI may be determined based on the summed size of all DCI fields for the first cell combination.

Cells co-scheduled through the DCI may be indicated as one of the cell combinations. The DCI may include information indicating one of the cell combinations.

The DCI may include first DCI field-related information for each of a first cell and a second cell which are co-scheduled. Based on that the first cell has a lower serving cell index than the second cell, the first DCI field-related information for the first cell may be located before the first DCI field-related information for the second cell in the DCI. For example, the first DCI field may include, but is not limited to, at least one of a modulation and coding scheme (MCS) field, a new data indicator (NDI) field, a redundancy version (RV) field, a hybrid automatic repeat request (HARQ) process ID field, a frequency domain resource allocation (FDRA) field, a time domain resource allocation (TDRA) field, and a transmission power command (TPC) field for a physical uplink shared channel (PUSCH).

Transmission (e.g., PUSCHs for UL grant DCI) or reception (e.g., PDSCHs for DL grant DCI) of scheduled signals may be performed only for the remaining cells excluding at least one invalid cell from among the cells co-scheduled through the DCI. The at least one invalid cell may include, but is not limited to, at least one of a deactivated secondary cell (SCell), a cell operating as a dormant bandwidth part (BWP), a cell of which resources allocated through the DCI overlap semi-static resources in which uplink (UE)/downlink (DL) directions are configured differently, and a cell of which frequency resource information indicated by the DCI is invalid. For example, assuming that the DCI is a DL grant DCI that schedules PDSCHs, hybrid automatic repeat request-acknowledgement (HARQ-ACK) information for the PDSCHs may be configured for the remaining cells excluding at least one invalid cell, or may be configured to include negative acknowledgement (NACK) information for at least one invalid cell. The DCI field values for at least one invalid cell in the DCI may be configured based on information for a specific bandwidth part (BWP).

FIG. 13 shows an example implementation of signal transmission by a BS based on at least some of the embodiments described above. Even without separate explanation, the previously explained contents may be referenced to help understand FIG. 13.

Referring to FIG. 13, the BS may generate downlink control information (DCI) (1305).

The BS may transmit the DCI to the UE based on at least one of physical downlink control channel (PDCCH) candidates of a UE (1310).

The DCI may support multi-cell scheduling based on cell combinations for a plurality of cells configured for the UE. A payload size of the DCI may be determined based on a first cell combination having the largest total number of DCI bits required for co-scheduled cells from among the cell combinations.

The payload of the DCI may be determined based on the summed size of all DCI fields for the first cell combination.

Cells co-scheduled through the DCI may be indicated as one of the cell combinations. The DCI may include information indicating one of the cell combinations.

The DCI may include first DCI field-related information for each of a first cell and a second cell which are co-scheduled. Based on that the first cell has a lower serving cell index than the second cell, the first DCI field-related information for the first cell may be located before the first DCI field-related information for the second cell in the DCI. For example, the first DCI field may include, but is not limited to, at least one of a modulation and coding scheme (MCS) field, a new data indicator (NDI) field, a redundancy version (RV) field, a hybrid automatic repeat request (HARQ) process ID field, a frequency domain resource allocation (FDRA) field, a time domain resource allocation (TDRA) field, and a transmission power command (TPC) field for a physical uplink shared channel (PUSCH).

Reception (e.g., PUSCHs for UL grant DCI) or transmission (e.g., PDSCHs for DL grant DCI) of scheduled signals may be performed only for the remaining cells excluding at least one invalid cell from among the cells co-scheduled through the DCI. The at least one invalid cell may include, but is not limited to, at least one of a deactivated secondary cell (SCell), a cell operating as a dormant bandwidth part (BWP), a cell of which resources allocated through the DCI overlap semi-static resources in which uplink (UL)/downlink (DL) directions are configured differently, and a cell of which frequency resource information indicated by the DCI is invalid. For example, assuming that the DCI is a DL grant DCI that schedules PDSCHs, hybrid automatic repeat request-acknowledgement (HARQ-ACK) information for the PDSCHs may be configured for the remaining cells excluding at least one invalid cell, or may be configured to include negative acknowledgement (NACK) information for at least one invalid cell. The DCI field values for at least one invalid cell in the DCI may be configured based on information for a specific bandwidth part (BWP).

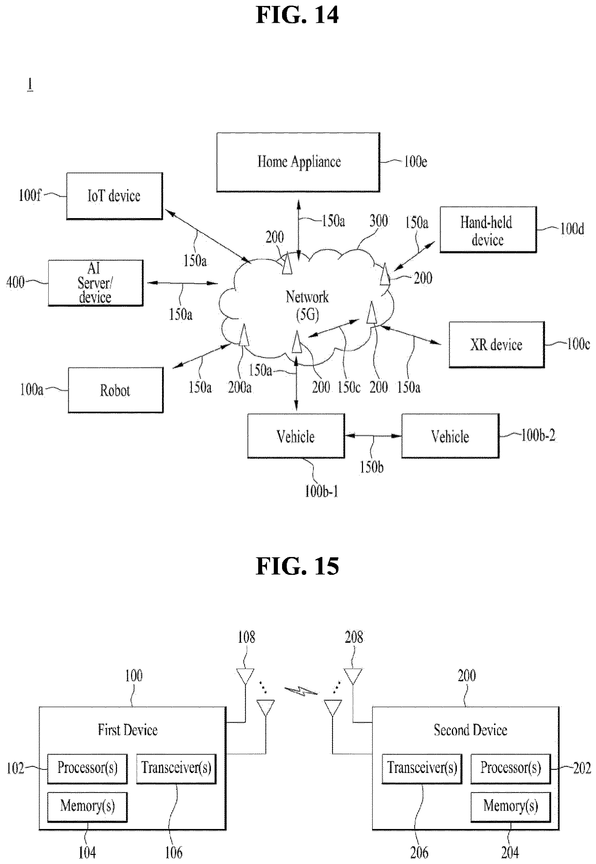

FIG. 14 illustrates a communication system 1 applied to the present disclosure.

Referring to FIG. 14, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 15 illustrates wireless devices applicable to the present disclosure.

Referring to FIG. 15, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 14.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

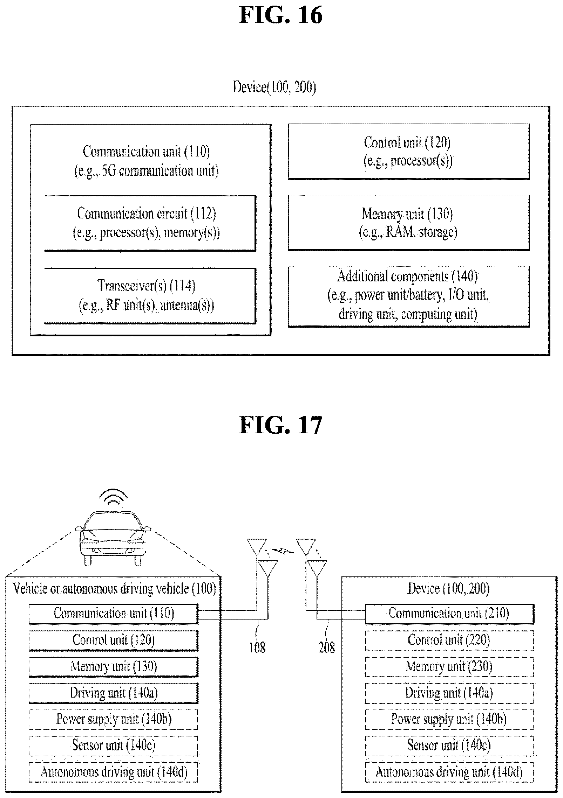

FIG. 16 illustrates another example of a wireless device applied to the present disclosure. The wireless device may be implemented in various forms according to a use-case/service (refer to FIG. 14).

Referring to FIG. 16, wireless devices 100 and 200 may correspond to the wireless devices 100 and 200 of FIG. 15 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 15. For example, the transceiver(s) 114 may include the one or more transceivers 106 and 206 and/or the one or more antennas 108 and 208 of FIG. 15. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 14), the vehicles (100b-1 and 100b-2 of FIG. 14), the XR device (100c of FIG. 14), the hand-held device (100d of FIG. 14), the home appliance (100e of FIG. 14), the IoT device (100f of FIG. 14), a digital broadcast terminal, a hologram device, a public safety device, an MTC device, a medicine device, a fintech device (or a finance device), a security device, a climate/environment device, the AI server/device (400 of FIG. 14), the BSs (200 of FIG. 14), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 17 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 17, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 16, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

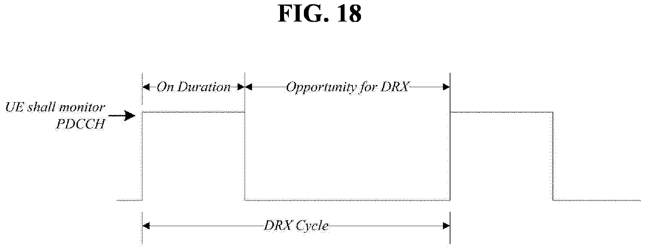

FIG. 18 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC INACTIVE state. DRX in the RRC_CONNECTED state (RRC_CONNECTED DRX) will be described below.

Referring to FIG. 18, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in the present disclosure. Irrespective of whether DRX is configured, PDCCH monitoring may be restricted during a time period configured as a measurement gap.

Table 7 describes a DRX operation of a UE (in the RRC_CONNECTED state). Referring to Table 7, DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the aforedescribed/proposed procedures and/or methods.

[Table 7]

| | Type of signals | UE procedure |
|---|---|---|
| 1st step | RRC signalling(MAC-Cell GroupConfig) | - Receive DRX configuration information |
| 2nd Step | MAC CE((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX.

- Value of drx-OnDurationTimer: defines the duration of the starting period of the DRX cycle
- Value of drx-InactivityTimer: defines the duration of a time period during which the UE is awake after a PDCCH occasion in which a PDCCH indicating initial UL or DL data has been detected
- Value of drx-HARQ-RTT-TimerDL: defines the duration of a maximum time period until a DL retransmission is received after reception of a DL initial transmission
- Value of drx-HARQ-RTT-TimerDL: defines the duration of a maximum time period until a grant for a UL retransmission is received after reception of a grant for a UL initial transmission
- drx-LongCycleStartOffset: defines the duration and starting time of a DRX cycle
- drx-ShortCycle (optional): defines the duration of a short DRX cycle

When any of drx-OnDurationTimer, drx-InactivityTimer, drx-HARQ-RTT-TimerDL, and drx-HARQ-RTT-TimerDL is running, the UE performs PDCCH monitoring in each PDCCH occasion, staying in the awake state.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

The present disclosure is applicable to UEs, BSs, or other apparatuses in a wireless mobile communication system.

**Claims**

1. A method of receiving a signal by a user equipment (UE) in a wireless communication system, the method comprising:

    monitoring physical downlink control channel (PDCCH) candidates; and
    detecting downlink control information (DCI) by monitoring the PDCCH candidates,
    wherein the DCI supports multi-cell scheduling based on cell combinations for a plurality of cells configured for the UE, and
    wherein a payload size of the DCI is determined based on a first cell combination in which a total number of DCI bits required for co-scheduled cells is maximum from among the cell combinations.

2. The method of claim 1, wherein a payload of the DCI is determined based on a summed size of all DCI fields for the first cell combination.

3. The method of claim 1, wherein cells co-scheduled through the DCI are indicated as one of the cell combinations.

4. The method of claim 1, wherein the DCI includes first DCI field-related information for each of a first cell and a second cell which are co-scheduled, and
wherein, based on that the first cell has a lower serving cell index than the second cell, the first DCI field-related information for the first cell is located before the first DCI field-related information for the second cell in the DCI.

5. The method of claim 4, wherein the first DCI field includes at least one of a modulation and coding scheme (MCS) field, a new data indicator (NDI) field, a redundancy version (RV) field, a hybrid automatic repeat request (HARQ) process ID field, a frequency domain resource allocation (FDRA) field, a time domain resource allocation (TDRA) field, or a transmission power command (TPC) field for a physical uplink shared channel (PUSCH).

6. The method of claim 1, wherein transmission or reception of a scheduled signal is performed only for remaining cells excluding at least one invalid cell from among cells co-scheduled through the DCI.

7. The method of claim 6, wherein the at least one invalid cell includes at least one of a deactivated secondary cell (SCell), a cell operating as a dormant bandwidth part (BWP), a cell of which resources allocated through the DCI overlap semi-static resources in which uplink (UL)/downlink (DL) directions are configured differently, and a cell of which frequency resource information indicated by the DCI is invalid.

8. The method of claim 6, wherein hybrid automatic repeat request-acknowledgement (HARQ-ACK) information is configured for remaining cells excluding the at least one invalid cell or is configured to include negative acknowledgement (NACK) information for the at least one invalid cell.

9. The method of claim 6, wherein DCI field values for the at least one invalid cell in the DCI are configured based on information for a specific bandwidth part (BWP).

10. A computer-readable recording medium having recorded thereon a program for performing the method of claim 1.

11. A device for wireless communication, the device comprising:

a memory configured to store instructions; and
a processor configured to store perform operations by executing the instructions,
wherein the operations of the processor include monitoring physical downlink control channel (PDCCH) candidates, and detecting downlink control information (DCI) by monitoring the PDCCH candidates,
wherein the DCI supports multi-cell scheduling based on cell combinations for a plurality of cells configured for the UE, and
wherein a payload size of the DCI is determined based on a first cell combination in which a total number of DCI bits required for co-scheduled cells is maximum from among the cell combinations.

12. The device of claim 11, further comprising:

a transceiver configured to transmit or receive a wireless signal under control of the processor,
wherein the device includes a user equipment (UE) in a wireless communication system.

13. The device of claim 11, wherein the device includes an application specific integrated circuit (ASIC) or a digital signal processing device, for controlling the UE.

14. A method of transmitting a signal by a base station (BS) in a wireless communication system, the method comprising:

generating downlink control information (DCI); and
transmitting the DCI based on at least one of physical downlink control channel (PDCCH) candidates of a user equipment (UE), to the UE,
wherein the DCI supports multi-cell scheduling based on cell combinations for a plurality of cells configured for the UE, and
wherein a payload size of the DCI is determined based on a first cell combination in which a total number of DCI bits required for co-scheduled cells is maximum from among the cell combinations.

**15.** Abase station (BS) for transmitting a signal in a wireless communication system, the BS comprising:

a transceiver; and
a processor configured to generate downlink control information (DCI) and transmit the DCI through the transceiver based on at least one of physical downlink control channel (PDCCH) candidates of a user equipment (UE), to the UE,
wherein the DCI supports multi-cell scheduling based on cell combinations for a plurality of cells configured for the UE, and
wherein a payload size of the DCI is determined based on a first cell combination in which a total number of DCI bits required for co-scheduled cells is maximum from among the cell combinations.

# FIG. 1

| Initial Cell Search | System Information Reception | Random Access Procedure | | | | General DL/UL Tx/Rx |
|---|---|---|---|---|---|---|

S108

| PSS/SSS & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |

S101　　　　S102　　　　S103　　S104　　　S105　　S106　　　S107

- DL/UL ACK/NACK
- UE CQI/PMI/Rank Report using PUSCH and PUCCH

# FIG. 2

| One Frame (10ms) |
|---|

| Half-Frame (5ms) | Half-Frame (5ms) |
|---|---|

| Subframe 0 (1ms) | Subframe 4 (1ms) | Subframe 5 (1ms) | Subframe 9 (1ms) |
|---|---|---|---|

Subframe (1ms)

15KHz | Slot (14 symbols) |

1ms

30KHz | Slot 0 (14 symbols) | Slot 1 |

500us

60KHz | Slot 0 (14 symbols) | Slot 1 | Slot 2 | Slot 3 |

250us

120KHz | Slot 0 (14 symbols) | Slot 1 | Slot 2 | Slot 3 | Slot 4 | Slot 5 | Slot 6 | Slot 7 |

125us

# FIG. 3

# FIG. 4

## FIG. 5

DL assingment-to-PDSCH offset (K0)

slot

PDCCH  PDSCH  PUCCH

PDSCH-to-HARQ-ACK reporting offset (K1)

## FIG. 6

UL grant-to-PUSCH offset (K2)

PDCCH  PUSCH

## FIG. 7

Cell A (Scheduling Cell)

Cell B (Scheduled Cell)

Cell C (Scheduled Cell)

CIF

CIF

CIF

CORESET (or Search Space Set)

PDCCH

PDSCH or PUSCH

Freq.

Slot #n    Slot #n+1    Slot #n+2    Time

## FIG. 8

(a) Carrier aggregation between L-band and U-band

(b) standalone U-band(s)

# FIG. 9

**FIG. 10**

**(a)**  1 DCI field

| Bit(s) for Cell A | Bit(s) for Cell B | Bit(s) for Cell C | ... | Bit(s) for Cell M |
|---|---|---|---|---|

**(b)**  DCI field X for M-Cell

| DCI field X for Cell A | DCI field X for Cell B | DCI field X for Cell C | ... | DCI field X for Cell M |
|---|---|---|---|---|

**(c)**  DCI fields X&Y for M-Cell

| DCI field X for Cell A | DCI field Y for Cell A | DCI field X for Cell B | DCI field Y for Cell B | DCI field X for Cell C | DCI field Y for Cell C | ... | ... | DCI field X for Cell M | DCI field Y for Cell M |
|---|---|---|---|---|---|---|---|---|---|

**(d)**  DCI fields X&Y for M-Cell

| DCI field X for Cell A | DCI field X for Cell B | DCI field X for Cell C | ... | DCI field X for Cell M | DCI field Y for Cell A | DCI field Y for Cell B | DCI field Y for Cell C | ... | DCI field Y for Cell M |
|---|---|---|---|---|---|---|---|---|---|

EP 4 518 228 A1

# FIG. 11

| Cell Combination | Co-scheduled Cell | Required (minimum) DCI payload size per cell combination |
|---|---|---|
| 1 | {Cell#1, Cell# 3, Cell#5} | Sum for all DCI fields = total A-bit |
| 2 | {Cell#1} | Sum for all DCI fields = total B-bit |
| 3 | {Cell#2, Cell#3, Cell#4} | Sum for all DCI fields = total C-bit |
| ............... | ............... | ............... |
| M | {Cell#2, Cell#4, Cell#5, Cell#N} | Sum for all DCI fields = total K-bit |

DCI payload size is determined based on Max {A, B, C,...., K}-bit

# FIG. 12

Monitor PDCCH candidates — 1205

Detect DCI — 1210

# FIG. 13

Generate DCI — 1305

Transmit DCI based on PDCCH candidates — 1310

# FIG. 14

1

# FIG. 15

# FIG. 16

Device(100, 200)

| Communication unit (110)<br>(e.g., 5G communication unit) | Control unit (120)<br>(e.g., processor(s)) |
|---|---|
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 17

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108

208

Device (100, 200)

Communication unit (210)

Control unit (220)

Memory unit (230)

Driving unit (140a)

Power supply unit (140b)

Sensor unit (140c)

Autonomous driving unit (140d)

# FIG. 18

UE shall monitor
PDCCH

On Duration

Opportunity for DRX

DRX Cycle

# INTERNATIONAL SEARCH REPORT

| | International application No. |
|---|---|
| | **PCT/KR2023/005780** |

## A. CLASSIFICATION OF SUBJECT MATTER

**H04L 5/00**(2006.01)i; **H04W 72/23**(2023.01)i; **H04L 1/00**(2006.01)i; **H04W 72/12**(2009.01)i

According to International Patent Classification (IPC) or to both national classification and IPC

## B. FIELDS SEARCHED

Minimum documentation searched (classification system followed by classification symbols)

H04L 5/00(2006.01); H04B 7/024(2017.01); H04W 36/08(2009.01); H04W 72/12(2009.01); H04W 72/14(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: DCI(downlink control information), 다중-셀(multi-cell), 스케줄링(scheduling), 페이로드(payload), 크기(size), 유효한(valid)

## C. DOCUMENTS CONSIDERED TO BE RELEVANT

| Category* | Citation of document, with indication, where appropriate, of the relevant passages | Relevant to claim No. |
|---|---|---|
| X | US 2022-0086894 A1 (SAMSUNG ELECTRONICS CO., LTD.) 17 March 2022 (2022-03-17)<br>See paragraphs [0080], [0111]-[0115] and [0120]; and claims 1 and 7-9. | 1-5,10-15 |
| Y | | 6-9 |
| Y | JP 4364833 B2 (SAMSUNG ELECTRONICS CO., LTD.) 18 November 2009 (2009-11-18)<br>See paragraph [0040]; and claims 10-11. | 6-9 |
| A | WO 2021-138796 A1 (QUALCOMM INCORPORATED) 15 July 2021 (2021-07-15)<br>See paragraphs [0091]-[0094]. | 1-15 |
| A | US 2022-0124788 A1 (TELEFONAKTIEBOLAGET LM ERICSSON (PUBL)) 21 April 2022 (2022-04-21)<br>See paragraphs [0123]-[0128]. | 1-15 |
| A | KR 10-2022-0031083 A (SAMSUNG ELECTRONICS CO., LTD.) 11 March 2022 (2022-03-11)<br>See paragraphs [0203]-[0258]. | 1-15 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **26 July 2023** | **26 July 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

International application No.

**PCT/KR2023/005780**

| Patent document cited in search report | | | Publication date (day/month/year) | Patent family member(s) | | | Publication date (day/month/year) |
|---|---|---|---|---|---|---|---|
| US | 2022-0086894 | A1 | 17 March 2022 | CN | 116134934 | A | 16 May 2023 |
| | | | | EP | 4165942 | A1 | 19 April 2023 |
| | | | | KR | 10-2023-0069091 | A | 18 May 2023 |
| | | | | WO | 2022-055333 | A1 | 17 March 2022 |
| JP | 4364833 | B2 | 18 November 2009 | AT | 463141 | T | 15 April 2010 |
| | | | | CN | 1756432 | A | 05 April 2006 |
| | | | | CN | 1756432 | C | 05 April 2006 |
| | | | | EP | 1594333 | A2 | 09 November 2005 |
| | | | | EP | 1594333 | A3 | 15 March 2006 |
| | | | | EP | 1594333 | B1 | 31 March 2010 |
| | | | | ES | 2343121 | T3 | 23 July 2010 |
| | | | | JP | 2005-333632 | A | 02 December 2005 |
| | | | | KR | 10-0651409 | B1 | 29 November 2006 |
| | | | | KR | 10-2005-0106341 | A | 09 November 2005 |
| | | | | US | 2005-0249187 | A1 | 10 November 2005 |
| | | | | US | 7701921 | B2 | 20 April 2010 |
| WO | 2021-138796 | A1 | 15 July 2021 | None | | | |
| US | 2022-0124788 | A1 | 21 April 2022 | CN | 113661677 | A | 16 November 2021 |
| | | | | EP | 3925142 | A1 | 22 December 2021 |
| | | | | JP | 2022-521689 | A | 12 April 2022 |
| | | | | JP | 7238147 | B2 | 13 March 2023 |
| | | | | MX | 2021009544 | A | 12 November 2021 |
| | | | | WO | 2020-165406 | A1 | 20 August 2020 |
| KR | 10-2022-0031083 | A | 11 March 2022 | CN | 114175805 | A | 11 March 2022 |
| | | | | EP | 3994942 | A1 | 11 May 2022 |
| | | | | US | 11425707 | B2 | 23 August 2022 |
| | | | | US | 2021-0014837 | A1 | 14 January 2021 |
| | | | | WO | 2021-006618 | A1 | 14 January 2021 |

Form PCT/ISA/210 (patent family annex) (July 2022)